# EUROPÄISCHE PATENTANMELDUNG

(11) **EP 1 310 701 A2**
(43) Veröffentlichungstag der Anmeldung: **14.05.2003**
(21) Anmeldenummer: 02024960.3
(22) Anmeldetag: 07.11.2002
(51) Int. Cl.: F16H 21/18

(54) **Getriebe**

(30) Priorität: 07.11.2001 DE 10154589; 14.02.2002 DE 10206144
(71) Anmelder: Miler, Marjan, 85646 Anzing (DE)
(72) Erfinder: Miler, Marjan, 85646 Anzing (DE)
(74) Vertreter: VOSSIUS & PARTNER

(57) **Zusammenfassung**

Die Erfindung betrifft ein Getriebe zur Umsetzung einer Bewegung mit einer translatorischen Richtungskomponente in eine Bewegung mit einer rotatorischen Richtungskomponente, wobei ein außenverzahnter Wandler, an dem die translatorische Richtungskomponente angreift, in einem innenverzahnten Hohlrad, dessen Innenverzahnung mit der Außenverzahnung des Wandlers in Eingriff steht, rotiert und mit dem Wandler ein Planetenrad koaxial verbunden ist.

## Beschreibung

Die Erfindung betrifft ein Getriebe zur Umsetzung einer Bewegung mit einer translatorischen Richtungskomponente in eine Bewegung mit einer rotatorischen Richtungskomponente.

Die Aufgabe der Umwandlung einer rotatorischen in eine translatorische Bewegung oder umgekehrt stellt sich bei den meisten Arbeits- oder Kraftmaschinen, insbesondere bei Hubkolbenmaschinen und damit auch insbesondere im Kraftfahrzeugbau. Hierbei muß die translatorische Bewegung eines oszillierenden Kolbens in eine rotatorische Bewegung z. B. zum Antrieb eines Kfz umgewandelt werden.

Heutzutage wird diese Aufgabe in der Regel durch Kurbeltriebe gelöst. Hierbei wird die oszillierende Bewegung des Kolbens über eine Schubstange in die rotierende Bewegung einer Kurbel bzw. einer Kurbelwelle umgewandelt. Nachteile derartiger Kurbeltriebe sind vor allem darin zu sehen, daß die Kraftabnahme am Kolben nicht auf seiner Achse, sondern entlang eines sich stetig ändernden Winkels erfolgt. Daraus resultieren zum einen Querkräfte und Momente, die auf den Kolben wirken und zu Kolbenkippen führen können, zum anderen fällt die Normalkraft F_{N} an, die nicht aufgenommen werden kann, wodurch der Wirkungsgrad des Kurbeltriebs begrenzt ist. Weiterhin greift die Kraft außerhalb der Achse der Kurbelwelle an diese an. Die Kurbelwelle wird hierdurch auf Biegung und das Nutzdrehmoment auf Verdrehen beansprucht. Zusätzlich können Drehschwingungen der Kurbelwelle entstehen, was sich wiederum negativ auf die an den Kolben angreifenden Kräfte auswirkt.

DE-A-199 57 746 beschreibt ein Kurbelgetriebe, das die anfallende Normalkraft F_{N}, die bei gewöhnlichen Kurbeltrieben über den Motorkolben und seine Zylinderwand verlustig geht, über ein Umlaufrädergetriebe in eine Drehkraft F_{C} überführt und dem Kurbelgetriebe zuführt. Dies wird bewirkt durch eine Kombination eines Umlaufrädergetriebes mit einem Stand-, Differential- oder Planetengetriebe. Hierbei werden die verschiedenen Kraftanteile über das Umlaufgetriebe und eine damit verbundene als Hohlwelle ausgelegte Kurbelwelle getrennt abgegriffen und zusammen einer Hauptwelle zugeführt.

JP-A-07 13 9604 beschreibt einen Mechanismus zur Halterung eines Kolbens in einer bestimmten Position. Hierbei wirkt der Kolben auf eine Kurbelstange die an einem Planeten eines Planetengetriebes angreift.

DE-A-198 25 528 offenbart einen Antrieb zur Erzeugung einer translatorischen periodischen Bewegung, insbesondere als Wischermotor. Hierbei wird eine Welle über ein Getriebe von einem Elektromotor angetrieben. Mit dieser Welle ist ein Kurbelarm verbunden, dessen freies Ende mit einem Zahnrad verbunden ist, das mit seiner Außenverzahnung in der Innenverzahnung des Getriebegehäuses kämmt. Auf dem Zahnrad ist wiederum ein Kugelzapfenträger mit einem Kugelzapfen angebracht, wobei der Abstand des Zentrums des Kugelzapfens zur Drehachse des Zahnrads genau dem halben Radius der Innenverzahnung des Getriebegehäuses entspricht. Durch die weiteren Abmessungsverhältnisse wird die Umwandlung der rotatorischen Bewegung des Motors in eine gradlinige periodische Bewegung des Kugelzapfens durch den Mittelpunkt des Getriebegehäuses erreicht.

Die WO 00/66913 beschreibt einen Kurbeltrieb für einen Verbrennungsmotor, der einen Kurbeltrieb sowie eine Innenverzahnung, die sich mit einer Außenverzahnung im Eingriff befindet, aufweist. Die Außenverzahnung wird hierbei durch eine Pleuelstange angetrieben, wobei die Pleuelstange nahe dem Umfang der Außenverzahnung mit dieser verbunden ist. Das Zahnrad mit der Außenverzahnung weist eine zweite Außenverzahnung auf, die sich mit einer weiteren an einer Kurbelwelle vorgesehenen Verzahnung im Eingriff befindet.

Während die DE-A-199 57 746 den bekannten Kurbeltrieb lediglich ergänzt und damit den bestehenden Nachteilen durch die Teilung und Wiederzusammenführung des Kraftflusses eine erhöhte Anforderung an Genauigkeiten und Abstimmung hinzufügt, wird in der in JP-A-07 13 9604 vorgeschlagenen Lösung die Kurbelwelle durch ein Planetengetriebe ersetzt. Die Nachteile des Kurbeltriebes bleiben hiervon unberücksichtigt. Der in DE-A-198 25 528 beschriebene Lösungsvorschlag nutzt die geometrischen Verhältnisse eines in einem Hohlrad rotierenden Zahnrades, das durch eine um den Mittelpunkt des Hohlrades drehende Kurbel angetrieben wird, und auf dessen Radius ein als Kugelzapfen ausgebildeter Abtrieb angeordnet ist, der sich beim Abwälzen des Zahnrades im Hohlrad periodisch, translatorisch durch den Mittelpunkt des Hohlrades bewegt. Als nachteilig erweist sich in diesem Fall der Antrieb über eine Kurbel mit zwei Gelenkstellen, wodurch im Gebrauch die gleichen Nachteile wie bei der Verwendung einer Kurbelwelle auftreten.

Der Erfindung liegt die Aufgabe zugrunde, ein Getriebe zur Wandlung einer rotatorischen in eine translatorische Bewegung zur Verfügung zu stellen, wobei die bestehenden Nachteile eines Kurbel- wie Kurbelwellentriebes vermieden werden. Die Aufgabe ist mit den Merkmalen der Patentansprüche gelöst.

Die Erfindung geht dabei zur Umsetzung einer Bewegung mit einer translatorischen Richtungskomponente in eine Bewegung mit einer rotatorischen Richtungskomponente oder umgekehrt von dem Gedanken aus, daß ein außenverzahnter Wandler, an dem die translatorische Richtungskomponente angreift, in einem innenverzahnten Hohlrad, dessen Innenverzahnung mit der Außenverzahnung des Wandlers im Eingriff steht, rotiert und daß mit dem Wandler ein Planetenrad koaxial verbunden ist. In einer bevorzugten erfindungsgemäßen Ausführungsform ist das Planetenrad vorzugsweise so mit dem Wandler verbunden, dass es unabhängig von der Rotation des Wandlers um die eigene Achse drehbar ist. In einer weiteren bevorzugten erfindungsgemäßen Ausführungsform weist der Wandler einen Anschluss auf, der zur Übertragung der rotatorischen Richtungskomponente dient.

In einer bevorzugten Ausführungsform der Erfindung weist der Wandler einen Radius R1 auf und wird auf einer Kreisbahn mit dem Radius R3 geführt. Auf dem Radius R1 des Wandlers ist ein Anschluß zum Angreifen der translatorischen Richtungskomponente angeordnet. Das Hohlrad weist einen Radius R2 auf, wobei R1 und R3 jeweils die Hälfte von R2 sind. In einer bevorzugten erfindungsgemäßen Ausführungsform weist der Wandler mindestens einen weiteren Anschluss zum Abgreifen der rotatorischen Richtungskomponente auf.

Das Planetengetriebe weist vorzugsweise ein oder mehrere Planetenräder auf und das Zentralrad des Planetengetriebes ist vorzugsweise als Sonnenrad und/oder als Hohlrad ausgebildet.

Die Erfindung geht in einer weiteren bevorzugten Ausführungsform zur Umsetzung einer Bewegung mit einer translatorischen Richtungskomponente in eine Bewegung mit einer rotatorischen Richtungskomponente oder umgekehrt von dem Gedanken aus, daß ein außenverzahnter Wandler, an dem die translatorische Richtungskomponente angreift, in einem innenverzahnten Hohlrad, dessen Innenverzahnung mit der Außenverzahnung des Wandlers im Eingriff steht, rotiert. Weiterhin ist ein Zahnrad, dessen Verzahnung mit der des Wandlers im Eingriff steht, als Zentralrad eines Planetengetriebes ausgelegt, und die rotatorische Richtungskomponente ist von dem Zahnrad und dem Wandler abgreifbar.

Das Zentralrad ist hierbei exzentrisch innerhalb des Hohlrades angeordnet derart, dass sich der Mittelpunkt des Zentralrades auf einer Kreisbahn um die Achse des Hohlrades dreht, wobei der Radius dieser Kreisbahn dem Radius des Zentralrades entspricht.

Die rotatorische Richtungskomponente wird vorzugsweise mittels Zapfen von dem Wandler und dem Zentralrad abgegriffen, die in entsprechende Bohrungen eingreifen. Die Zapfen sind mit einer Welle, deren Achse mit der Achse des Hohlrades übereinstimmt, als exzentrische Verlängerung derselben verbunden.

In einer bevorzugten Ausführungsform der Erfindung weist der Wandler einen Radius R1 auf und wird auf einer Kreisbahn mit dem Radius R3 geführt. Auf dem Radius R1 des Wandlers ist ein Anschluß zum Angreifen der translatorischen Richtungskomponente angeordnet. Das Hohlrad weist einen Radius R2 auf, wobei R1 und R3 jeweils die Hälfte von R2 sind.

Das Planetengetriebe weist vorzugsweise ein oder mehrere Planetenräder auf.

Am Anschluß des Wandlers der erfindungsgemäßen Ausführungsformen greift/greifen vorzugsweise ein Kolben oder zwei gegenüberliegende Kolben an, wobei der Anschluß vorzugsweise in Form eines Zapfens oder einer Bohrung ausgebildet ist.

Die erfindungsgemäßen Getriebe sind vorzugsweise einstufig, mehrstufig oder stufenlos ausgebildet. Weiterhin sind in einer bevorzugten Ausführungsform der Erfindung mehrere der beschriebenen Getriebe zur Nutzbarmachung der Arbeit mehrerer Zylinder bzw. zur Übertragung einer rotatorischen Richtungskomponente in mehrere translatorische Richtungskomponenten zu einer Getriebeanordnung kombiniert. Die Erfindung wird vorzugsweise zum Einsatz in einer Arbeits- oder Kraftmaschine, insbesondere zum Einsatz in Verbrennungsmotoren oder -kompressoren verwandt. Die Erfindung ist weiterhin bevorzugt in den Bereichen Modellbau bzw. Spielzeug verwendbar.

Im folgenden wird die Erfindung anhand der Zeichnungen näher erläutert. Es zeigen:
- Fig. 1: ein Prinzipbild der der Erfindung zugrunde liegenden Umwandlung einer rotatorischen Bewegung in eine translatorische Bewegung oder umgekehrt;
- Fig. 2: eine dreidimensionale Rückansicht einer erfindungsgemäßen Ausführungsform in Verbindung mit einem Planetengetriebe ohne Hohlrad;
- Fig. 3: eine dreidimensionale Rückansicht einer erfindungsgemäßen Ausführungsform mit einem Planetengetriebe mit Hohlrad.
- Fig. 4: eine dreidimensionale Rückansicht einer weiteren erfindungsgemäßen Ausführungsform in Verbindung mit einem Planetengetriebe;
- Fig. 5: eine dreidimensionale Ansicht einer erfindungsgemäßen Ausführungsform gemäß Fig. 4 mit einem Planetengetriebe mit Welle;
- Fig. 6: eine dreidimensionale Darstellung einer weiteren erfindungsgemäßen Ausführungsform;
- Fig. 7: eine dreidimensionale schematische Darstellung eines Bewegungsablaufs einer bevorzugten erfindungsgemäßen Ausführungsform;
- Fig. 8: eine Darstellung eines doppelseitigen Kolbens zum Anschluss an ein erfindungsgemäßes Getriebe;
- Fig. 9: eine dreidimensionale Darstellung eines erfindungsgemäßen Getriebes; und
- Fig. 10: eine dreidimensionale Darstellung und Explosionsdarstellung einer erfindungsgemäßen Ausführungsform.

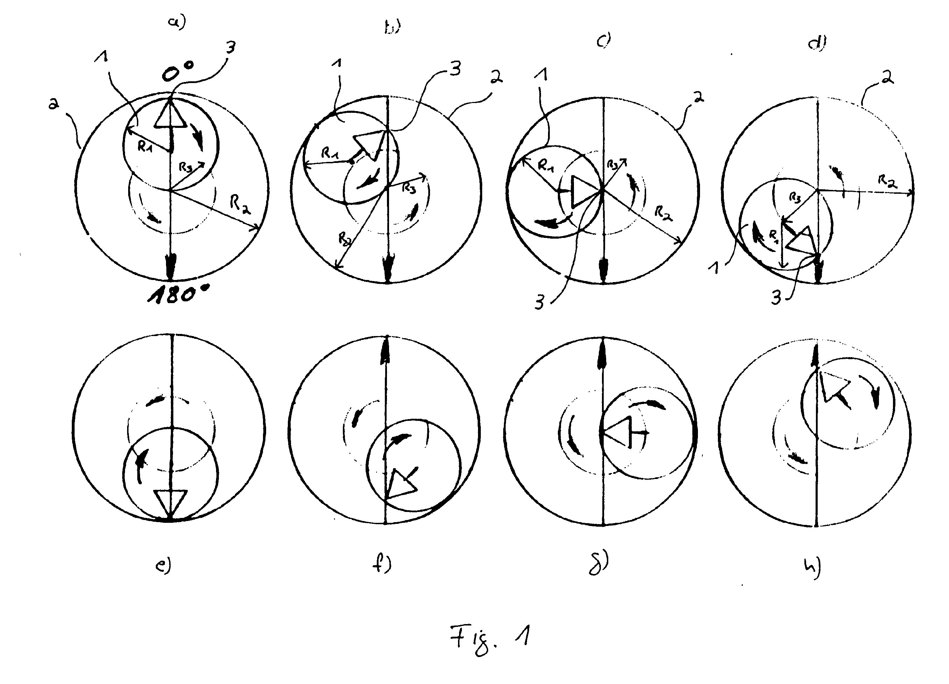

Figur 1 zeigt den prinzipiellen Ablauf der Umwandlung einer translatorischen in eine rotatorische Bewegung oder umgekehrt. Hierbei rotiert ein außenverzahnter Wandler 1 so in einem innenverzahnten Hohlrad 2, daß seine Außenverzahnung mit der Innenverzahnung des Hohlrades im Eingriff ist, und daß ein auf dem Wandler 1 angeordneter Anschluß 3 der translatorischen Bewegung sich während der Rotation des Wandlers auf einer Geraden durch den Mittelpunkt des Hohlrades 2 bewegt. Hierzu weist der Wandler 1 einen Radius R1 und das Hohlrad 2 einen Radius R2 auf, und der Mittelpunkt des Wandlers 1 rotiert auf einem Radius R3 um den Mittelpunkt des Hohlrades 2. Der Anschluß 3 ist auf dem Radius R1 des Wandlers 1 angeordnet und die Radien R1 wie R3 betragen jeweils die Hälfte des Radius R2. Der Anschluß 3 überfährt somit bei einer 180°-Drehung des Wandlers 1 eine Strecke entsprechend 2*R2.

In Figur 1 ist die Position des Anschlusses 3 auf dem Radius R1 des Wandlers 1 durch die Pfeilspitze markiert. Der Bewegungsablauf beginnt in Figur 1a bei 0° mit der Rotation des Wandlers 1 im Uhrzeigersinn um die eigene Achse. Hierdurch rotiert der Wandler 1, dessen Außenverzahnung mit der Innenverzahnung des Hohlrades 2 im Eingriff steht, gegen den Uhrzeigersinn auf dem Radius R3 im Hohlrad (Figur 1b). Der Anschluß 3, gekennzeichnet durch die Pfeilspitze, bewegt sich während der Rotation des Wandlers auf einer Geraden durch den Mittelpunkt des Hohlrades 2 (Figur 1c) und erreicht nach einer 180°-Drehung des Wandlers - sowohl um die eigene Achse, als auch um den Mittelpunkt des Hohlrades 2 - die der Ausgangsposition (Figur 1a) gegenüberliegende Position auf dem Radius des Hohlrades 2 (Figur 1e). Durch die weitere Drehung des Wandlers 1 ab dem Drehwinkel 180° (Figur 1f ff.) ändert die translatorische Verschiebung des Anschlusses 3 die Richtung und der Anschluß bewegt sich auf der selben Geraden zurück zum Ausgangspunkt (Figur 1a), den er nach einer 360°-Rotation des Wandlers 1 erreicht.

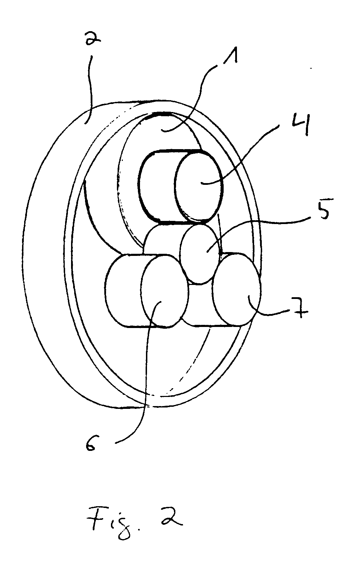

Figur 2 zeigt eine erfindungsgemäße Ausführungsform, wobei ein Planetenrad 4 eines Planetengetriebes koaxial mit dem Wandler 1 verbunden ist. Weiterhin befindet sich das Planetenrad 4 im Eingriff mit einem Zentralrad 5, das wiederum bevorzugt mit den Planetenrädern 6 und 7 im Eingriff ist. Die Drehung des Zentralrades 5 bewirkt eine Drehung des Planetenrades 4 und mit ihm des Wandlers 1 in entgegengesetzter Richtung. Hierbei vollzieht der Anschluß 3 eine periodische, translatorische Bewegung durch den Mittelpunkt des Hohlrades 2.

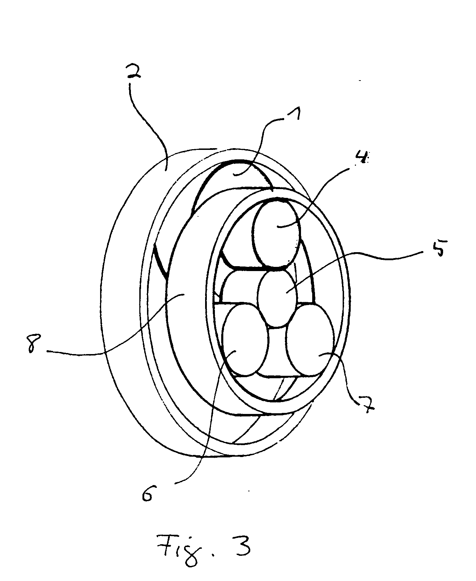

Figur 3 zeigt eine erfindungsgemäße Ausführungsform, wobei das Planetengetriebe ferner ein Hohlrad 8 aufweist.

In einer weiteren bevorzugten erfindungsgemäßen Ausführungsform ist das Planetenrad 4 gegenüber dem Wandler 1 um die eigene Achse drehbar angeordnet. In diesem Fall sind Sonnenrad 5 und/oder Hohlrad 8 vorzugsweise fest, d.h. nicht drehbar, angeordnet.

Gemäß nicht dargestellten, erfindungsgemäßen Ausführungsformen sind die Hohlräder 2 und/oder 8 in das Getriebegehäuse integriert oder Teil desselben. Weiterhin sind verschiedenste Ausführungsformen von Planetengetrieben, wie Umlaufrädergetriebe, Wendegetriebe, Übersetzungsgetriebe, Überlagerungsgetriebe, Schaftgetriebe, Mehrsteggetriebe und weitere mögliche Ausführungsformen, bei denen der Wandler 1 mit dem, oder einem der, Planetenräder 4 koaxial verbunden ist, erfindungsgemäß. In einer weiteren erfindungsgemäßen Ausführungsform ist das Planetengetriebe als mehrstufig oder auch stufenlos verstellbares Getriebe ausgelegt.

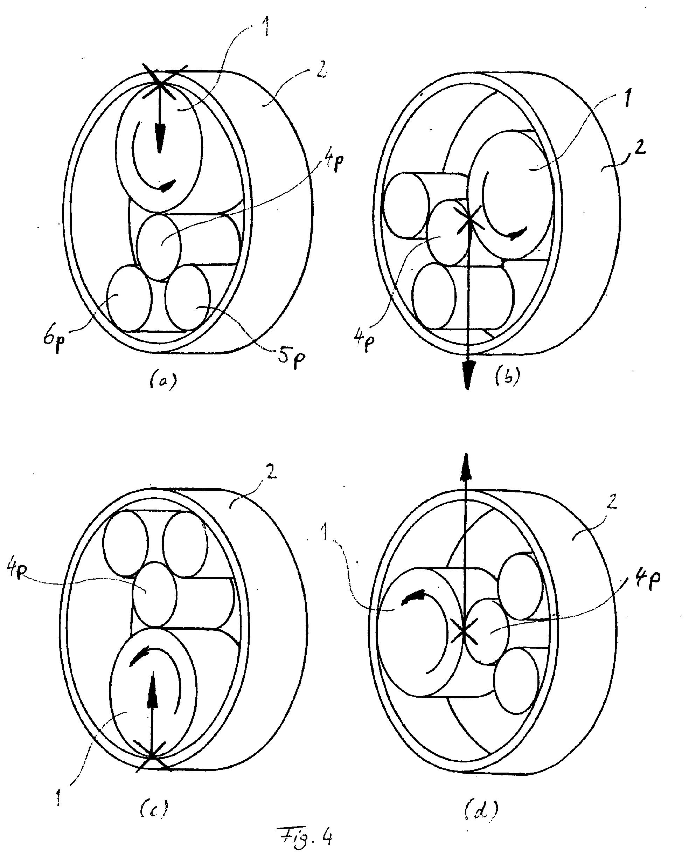

Figur 4 zeigt eine weitere erfindungsgemäße Ausführungsform und veranschaulicht noch einmal die Umwandlung der translatorischen Bewegung in eine rotatorische Bewegung. Der Wandler 1 befindet sich im Eingriff mit einem Zentralrad 4p, das dem Planetenrad 4 der zuvor beschriebenen Ausführungformen entspricht, das wiederum mit den Planetenrädern 5p und 6p im Eingriff ist, wobei diese im Hohlrad 2 angeordnet sind. Die Drehung des Zentralrades 4p bewirkt eine Drehung des Wandlers 1 in entgegengesetzter Richtung. Hierbei vollzieht der Anschluß 3 eine periodische, translatorische Bewegung durch den Mittelpunkt des Hohlrades 2.

In Figur 4 ist auch eine exzentrische Anordnung des Zentralrades 4p im Hohlrad 2 zu sehen. Ferner veranschaulicht die Abfolge der Figuren 4a bis 4d anhand des eingezeichneten "X" die translatorische Verschiebung auf der Geraden durch die Hohlradachse.

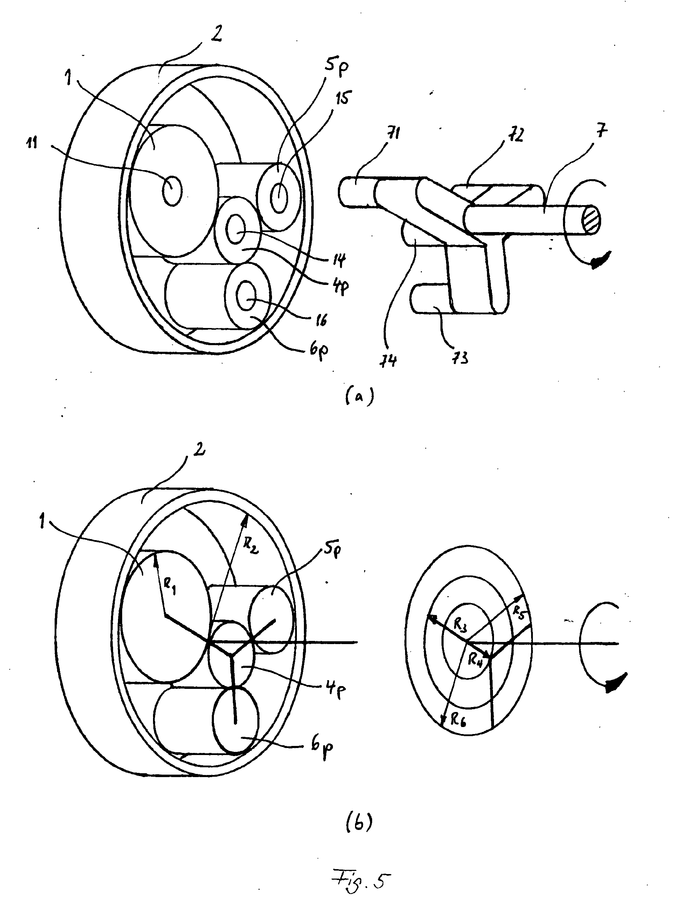

Figur 5 zeigt eine erfindungsgemäße Ausführungsform, wobei ferner die Welle 7 zur Abnahme der rotatorischen Bewegung von dem Wandler dargestellt ist. Wie in Figur 5a veranschaulicht, weisen der Wandler 1, das Zentralrad 4p, sowie die Planetenräder 5p, 6p zentrische Bohrungen 11, 14, 15, 16 auf, in die entsprechende Zapfen 71, 72, 73, 74 eingreifen. Diese Zapfen sind exzentrisch mit der Welle 7 verbunden und vereinigen die rotatorischen Bewegungen des Wandlers 1, des Zentralrades 4p, und der Planetenräder 5p, 6p in eine gemeinsame rotatorische Bewegung der Welle 7.

Figur 5b veranschaulicht die Radien der einzelnen Räder R1 (Wandler 1), R2 (Hohlrad 2), R3 (Bahn des Mittelpunktes des Wandlers 1), R4 (Bahn des Mittelpunktes des Zentralrades 4p), R5 (Bahn des Mittelpunktes des Planetenrades 5p) und R6 (Bahn des Mittelpunktes des Planetenrades 6p).

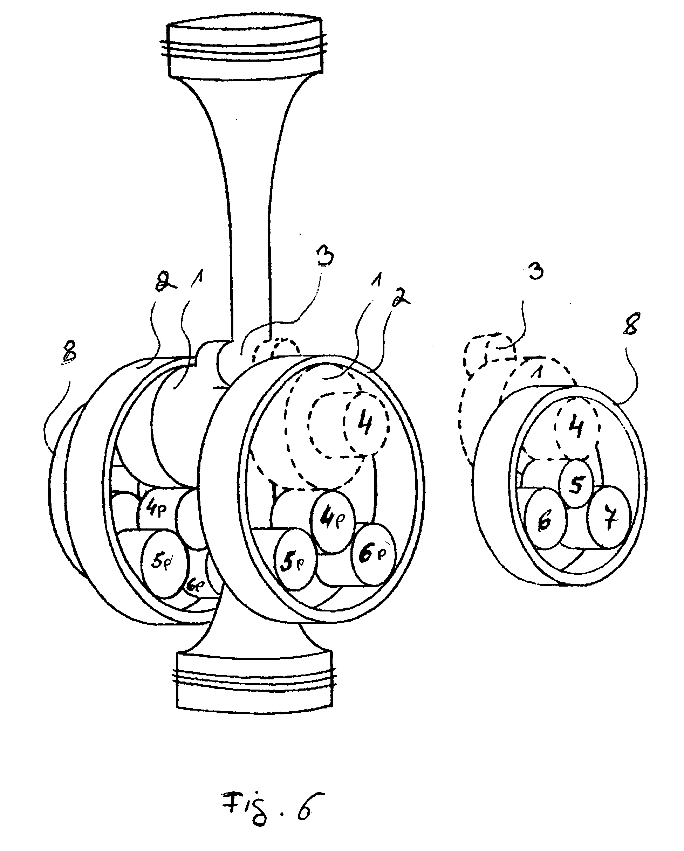

Fig. 6 veranschaulicht ein erfindungsgemäßes Getriebe wie bereits in Fig. 4 dargestellt. Die Anordnung in Fig. 6 zeigt zwei spiegelbildlich zueinander angeordnete Getriebe, die jeweils auf einer gegenüberliegenden Seite an einem Kolben angeordnet sind. Wie in Fig. 6 dargestellt, sind an dem bzw. den Anschlüssen 3 zwei gegenüberliegende Kolben angeordnet. In einer bevorzugten erfindungsgemäßen Ausführungsform sind die beiden Kolben einteilig, in einer anderen zweiteilig ausgeführt. Des Weiteren zeigt Fig. 6, wie besonders aus der Explosionsdarstellung hervorgeht, dass ein Getriebe gemäß der in Fig. 4 dargestellten Ausführungsform vorteilhaft mit der in Fig. 3 dargestellten Ausführungsform kombinierbar ist. Hierdurch sind die beschriebenen Vorteile der beiden Ausführungsformen miteinander kombinierbar.

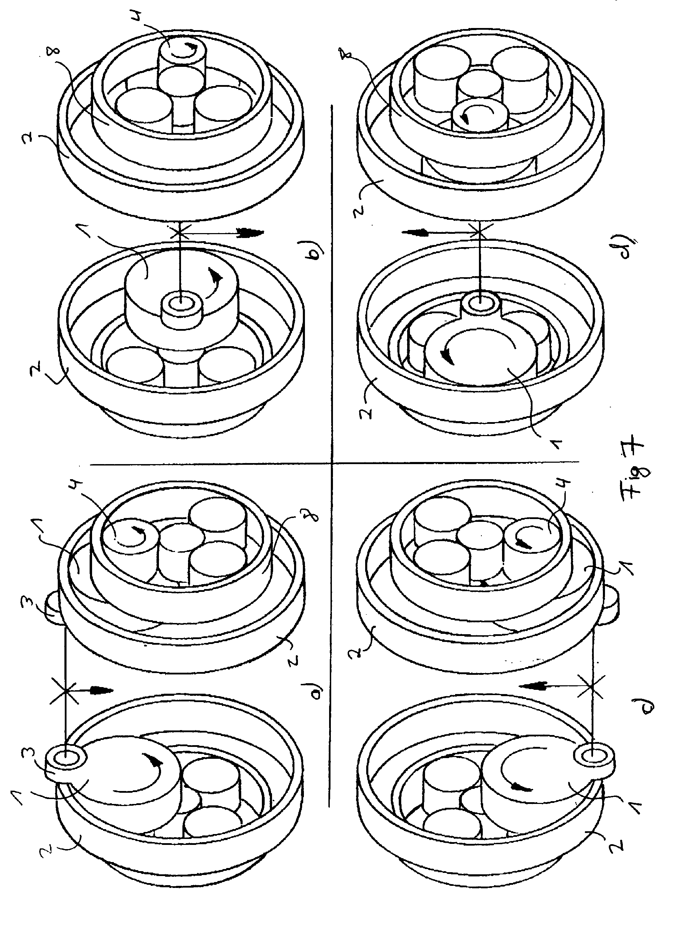

Fig. 7 zeigt schematisch den Bewegungsablauf eines erfindungsgemäßen Getriebes, wobei Fig. 7a die für diesen Fall gewählte Ausgangsstellung darstellt. Gemäß Fig. 7a befindet sich ein (nicht dargestellter) in Bildebene oben angeordneter Kolben im oberen Totpunkt, wohingegen sich ein (ebenfalls nicht dargestellter) unten am Anschluss 3 angeordneter Kolben im unteren Totpunkt befindet. In Figuren 7b, 7c und 7d wird das Abrollen des Wandlers 1 in die untere Extremposition (Fig. 7c) sowie das weitere Abrollen bis zur Ausgangsposition (Fig. 7a) dargestellt. Hierbei wird deutlich, dass sich der Anschluss 3 des Kolbens auf einer Geraden durch den Mittelpunkt des durch den Mittelpunkt des abrollenden Wandlers 1 beschriebenen Kreises bewegt.

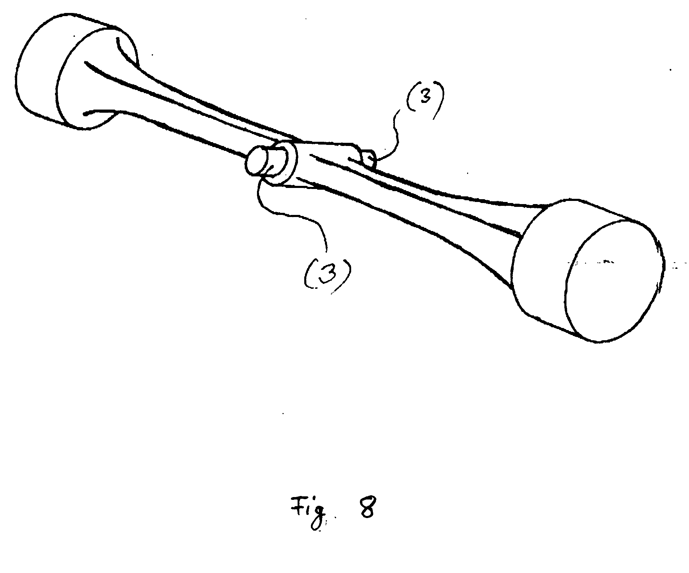

Fig. 8 zeigt eine beispielhafte Darstellung eines doppelseitigen Kolbens zum Anschluss an ein erfindungsgemäßes Getriebe. Der dargestellte Kolben weist zwei Anschlüsse zum Anordnen an zwei einander gegenüberliegend angeordneten erfindungsgemäßen Getrieben auf. In einer weiteren, nicht dargestellten, erfindungsgemäßen Ausführungsform weist der Kolben nur einen Anschluss auf bzw. ist nur an einem Getriebe angeordnet.

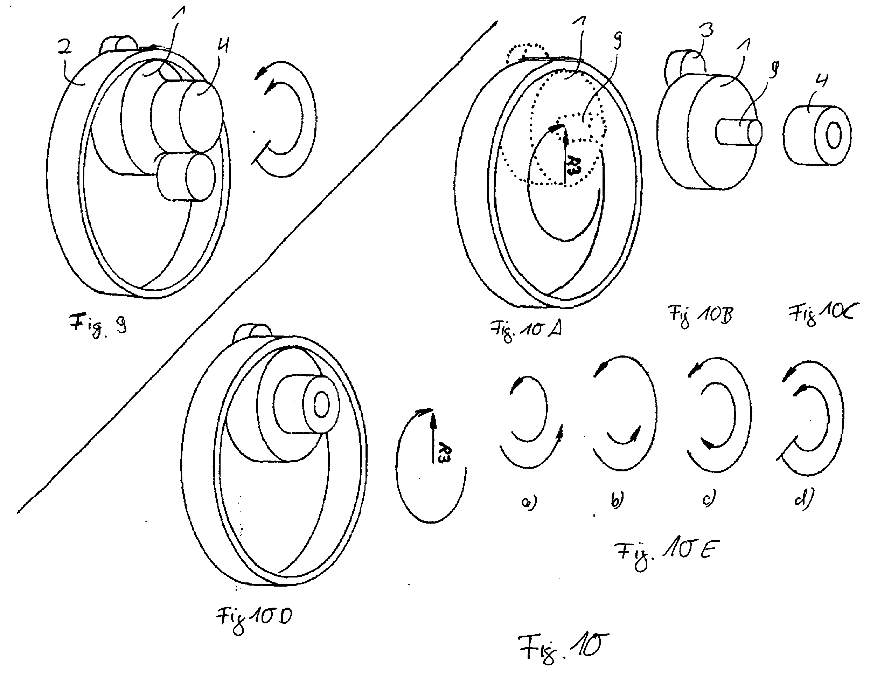

Fig. 9 zeigt eine erfindungsgemäße Ausführungsform, bei der Wandler 1 und Planetenrad 4 einteilig ausgebildet sind bzw. drehsteif zueinander angeordnet sind. Hierbei dreht sich das Planetenrad bei dem Ablaufen des Wandlers im Hohlrad 2 auf dem Radius 3 sowie um die eigene Achse. Die Drehung um die eigene Achse sowie die Drehung entlang des Radius R3 erfolgen hierbei mit der Drehzahl bzw. Drehgeschwindigkeit des Wandlers 1.

Fig. 10 zeigt eine bevorzugte erfindungsgemäße Ausführungsform, bei der der Wandler 1 einen Anschluss 9 aufweist. Dieser Anschluss ist vorzugsweise als Zapfen oder Vertiefung ausgebildet. Der Anschluss 9 kann je nach Anwendungsfall auch weitere übliche Formen annehmen. Der Anschluss ist vorzugsweise koaxial zum Wandler 1 bzw. mittig zu diesem angeordnet.

In einer weiteren bevorzugten erfindungsgemäßen Ausführungsform greift der Anschluss 9 an einem Rohr einer Scheibe oder sonst einem Element an und versetzt dieses in Rotation.

Gemäß der Darstellung der erfindungsgemäßen Ausführungsform nach Fig. 10 wird das Planetenrad 4 am Wandler 1 angeschlossen. Wandler 1 und Planetenrad 4 stellen hierbei baulich getrennte Elemente dar. Die Verbindung zwischen Planetenrad 4 und Wandler 1 erfolgt hierbei derart, dass bei einem Abrollen des Wandlers 1 im Hohlrad 2 das Planetenrad 4 entlang dem Radius 3 geführt wird, wobei es unabhängig vom Wandler 1 um die eigene Achse drehbar ist. In einer bevorzugten erfindungsgemäßen Ausführungsform ist das Planetenrad 4 entsprechend gelagert. In einer weiteren bevorzugten Ausführungsform ist das Planetenrad 4 koaxial zum Wandler 1 angeordnet.

Läuft der Wandler 1 im Hohlrad 2 ab, führt er über den Anschluss 9 das Planetenrad 4 auf dem Radius R3. Hierbei rotiert der Wandler 1, wie bereits diskutiert, um die eigene Achse. Das Planetenrad 4 vermag nun entsprechend der vorstehend beschriebenen Ausführungsform unabhängig vom Wandler um die eigene Achse zu rotieren. Das heißt, es können sich, wie in den Figuren 10Ea bis d dargestellt, unterschiedliche Verhältnisse der Drehgeschwindigkeiten bzw. Drehzahlen des Wandlers 1 und des Planetenrades 4 ergeben. So kann das Planetenrad 4 im Verhältnis zum Wandler schneller (Fig. 10Ea), langsamer (Fig. 10Eb), entgegengesetzt (Fig. 10Ec) oder identisch (Fig. 10Ed) rotieren. Die Rotation des Planetenrades 4 um die eigene Achse hängt hierbei von einer Vielzahl dem Fachmann bekannten Faktoren, wie beispielsweise Zähnezahl- oder Durchmesserverhältnis zu weiteren angeschlossenen (nicht dargestellten) Zahnrädern oder Anschlusselementen sowie deren Freiheitsgraden ab.

Gemäß nicht dargestellten, erfindungsgemäßen Ausführungsformen ist das Hohlrad 2 in das Getriebegehäuse integriert oder Teil desselben. Weiterhin sind verschiedenste Ausführungsformen von Planetengetrieben, wie Umlaufrädergetriebe, Wendegetriebe, Übersetzungsgetriebe, Überlagerungsgetriebe, Schaftgetriebe und Mehrsteggetriebe erfindungsgemäß. In einer weiteren erfindungsgemäßen Ausführungsform ist das Planetengetriebe als mehrstufig oder auch stufenlos verstellbares Getriebe ausgelegt.

Durch die geometrischen Verhältnisse des erfindungsgemäßen Getriebes bewegt sich der Anschluß periodisch auf einer Geraden. Die Länge einer Strecke entspricht hierbei beispielsweise dem Hub eines angeschlossenen Zylinderkolbens, wobei die Extrempositionen des Anschlusses bei 0 und 180° (Figur 1a, Figur 1e) beispielsweise den Positionen des angeschlossenen Zylinderkolbens im oberen und unteren Totpunkt entsprechen. Die Verbindung eines Zylinderkolbens mit dem Wandler muß hierzu auf dem Radius R1 des Wandlers angeordnet sein. Hierzu wird der Anschluß 3 vorzugsweise mittels eines Verbindungselements realisiert, das innerhalb des Radius R1 am Wandler 1 befestigt ist, und das über den Radius R1 des Wandlers 1 hinausragt, so daß der Anschluß 3, der vorzugsweise in Form einer Bohrung oder eines Zapfens ausgeführt ist, genau auf dem Radius R1 des Wandlers 1 angeordnet ist.

Durch die ebene Bewegung entlang des Längsachse des Kolbens wird das Auftreten von Querkräften und von Biegemomenten auf den Kolben und die Zylinderwand vermieden, was wiederum den Kraftverlust minimiert und einen ruhigen, gleichmäßigen Bewegungsablauf ermöglicht. Über den im Hohlrad 2 rotierenden Wandler 1 wird das Planetenrad 4 bzw. Zentralrad 4p angetrieben. Es rotiert in einem Planetengetriebe auf dem Radius R3 bzw. R4. Die Umlenkung der translatorischen Kraft des Kolbens in die rotatorische Kraft einer Welle und umgekehrt erfolgt hierbei linear in allen Drehzahlen gleichmäßig. Der ruhige Lauf des Getriebes wird dadurch unterstützt, daß in Planetengetrieben die Radialkräfte geschlossen sind und nicht an die Lager des Getriebegehäuses kommen. Auch sind sich negativ auswirkende Schwungmassen im Planetengetriebe gegenüber denen einer Kurbelwelle deutlich reduziert. Weiterhin wird ein Ausgleich statische Kräfte innerhalb des gesamten Getriebesystems und eine geringere Empfindlichkeit gegen Stoßbelastungen erreicht. Der Abtrieb erfolgt, je nach Ausführungsform, über einer der Getriebewellen. Im Falle des Einsatzes des beschriebenen Getriebes in einem Kompressor erfolgt der Kraftfluß mit denselben Vorteilen in umgekehrter Richtung.

Durch die gleichmäßige Verteilung der Kräfte über die Planetenräder entstehen keine Querkräfte bzw. Verbindungen.

Im Vergleich zur ersten Ausführungsform mit zentriert angeordnetem Zentralrad zur Ausführungsform mit exzentrisch innerhalb des Hohlrades angeordnetem Zentralrad besteht dadurch, dass der Wandler 1 nun erfindungsgemäß direkt mit dem Zahnrad 4 zusammenwirkt, keine Gefahr des Verkippens des Wandlers bezüglich des Zentralrades.

## Patentansprüche

1. Getriebe zur Umsetzung einer Bewegung mit einer translatorischen Richtungskomponente in eine Bewegung mit einer rotatorischen Richtungskomponente oder umgekehrt,
**gekennzeichnet durch**
einen außen verzahnten Wandler (1), an dem die translatorische Richtungskomponente angreift;
ein innen verzahntes Hohlrad (2), dessen Innenverzahnung mit der Außenverzahnung des Wandlers (1) im Eingriff steht;
ein mit dem Wandler (1) koaxial verbundener Anschluss (9), der auf einem Radius (R3) rotiert.

2. Getriebe nach Anspruch 1, wobei an dem Anschluss (9) ein Planetenrad (4) angeordnet ist, das in einem Planetengetriebe rotiert.

3. Getriebe nach Anspruch 1, ferner aufweisend ein Zahnrad (5, 8), dessen Verzahnung mir der des Planetenrades (4) im Eingriff steht, wobei das Zahnrad (5, 8) als Zentralrad eines Planetengetriebes ausgelegt ist, und wobei die rotatorische Richtungskomponente von dem Zahnrad (5, 8) abgreifbar ist.

4. Getriebe zur Umsetzung einer Bewegung mit einer translatorischen Richtungskomponente in eine Bewegung mit einer rotatorischen Richtungskomponente oder umgekehrt,
**gekennzeichnet durch**
einen außen verzahnten Wandler (1), an dem die translatorische Richtungskomponente angreift;
ein innen verzahntes Hohlrad (2), dessen Innenverzahnung mit der Außenverzahnung des Wandlers (1) im Eingriff steht; und
ein Zahnrad (4p), dessen Verzahnung mit der des Wandlers (1) in Eingriff steht, wobei das Zahnrad (4p) als Zentralrad eines Planetengetriebes ausgelegt ist, und wobei die rotatorische Richtungskomponente von dem Wandler (1) und dem Zahnrad (4p) abgreifbar ist.

5. Getriebe nach einem der Ansprüche 1 bis 4, wobei der Wandler (1) einen Radius R1 aufweist, der Wandler (1) auf einer Kreisbahn mit dem Radius R3 geführt wird, ein Anschluß (3) zum Angreifen der translatorischen Richtungskomponente auf dem Radius R1 des Wandlers (1) angeordnet ist, das Hohlrad (2) einen Radius R2 aufweist und wobei R1 und R3 jeweils die Hälfte von R2 sind.

6. Getriebe nach Anspruch 1 bis 3 oder 5, wobei das Zentralrad als Sonnenrad (5) und/oder als Hohlrad (8) ausgebildet ist.

7. Getriebe nach einem der Ansprüche 1 bis 3, 5 oder 6, wobei das Getriebe ein oder mehrere Planetenräder (4, 6, 7) aufweist und an dem Getriebe die rotatorische Richtungskomponente abgreifbar ist.

8. Getriebe nach Anspruch 4 oder 5, wobei das Zentralrad als exzentrisch angeordnetes Sonnenrad (4p) ausgebildet ist.

9. Getriebe nach einem der Ansprüche 4, 5 oder 8, wobei das Getriebe ein oder mehrere Planetenräder (5p, 6p) aufweist an denen die rotatorische Richtungskomponente abgreifbar ist.

10. Getriebe nach einem der Ansprüche 4, 5, 8 oder 9, wobei der Wandler (1) und das Zentralrad (4p) Bohrungen (11, 14) aufweisen, in die mit einer Welle (7) verbundene Zapfen (71, 74) zum Abgreifen der rotatorischen Richtungskomponente in Eingriff bringbar sind.

11. Getriebe nach einem der Ansprüche 1 bis 10, wobei ein Kolben oder zwei gegenüberliegende Kolben am Anschluß (3) des Wandlers (1) angreift bzw. angreifen.

12. Getriebe nach Anspruch 1 bis 11, wobei der auf dem Radius des Wandlers (1) angeordnete Anschluß (3) in Form eines Zapfens oder einer Bohrung ausgebildet ist.

13. Getriebeanordnung nach Anspruch 1 bis 12, **dadurch gekennzeichnet, daß** mehrere der in den Ansprüchen 1 bis 12 beschriebenen Getriebe zur Nutzbarmachung der Arbeit mehrerer Zylinder bzw. zur Übertragung einer rotatorischen Richtungskomponente in mehrere translatorische Richtungskomponenten kombiniert sind.

14. Verwendung eines Getriebes nach Anspruch 1 bis 12 bzw. Verwendung einer Getriebeanordnung nach Anspruch 13 zum Einsatz in einer Arbeitsoder Kraftmaschine, insbesondere zum Einsatz in Verbrennungsmotoren oder Kompressoren.
